# EUROPÄISCHE PATENTSCHRIFT

(11) **EP 1 104 378 B1**
(45) Veröffentlichungstag und Bekanntmachung des Hinweises auf die Patenterteilung: **03.07.2002**
(21) Anmeldenummer: 99932595.4
(22) Anmeldetag: 29.07.1999
(51) Int. Cl.: B62D 5/04, H02K 41/06

(54) **ELEKTRISCH UNTERSTÜTZTE LENKHILFE MIT KOMPAKTEM PLANETENGETRIEBE**
ELECTRICALLY ASSISTED STEERING BOOSTER WITH A COMPACT PLANETARY GEAR
DIRECTION ASSISTEE PAR MOTEUR ELECTRIQUE, DOTEE D'UN ENGRENAGE PLANETAIRE COMPACT

(30) Priorität: 15.08.1998 CH 168398
(43) Veröffentlichungstag der Anmeldung: 06.06.2001
(73) Patentinhaber: Krupp Presta Aktiengesellschaft, 9492 Eschen (LI)
(72) Erfinder: BATTLOGG, Stefan, A-6771 St. Anton im Montafon (AT)
(74) Vertreter: Wegmann, Urs
(86) Internationale Anmeldenummer: CH9900356
(87) Internationale Veröffentlichungsnummer: WO0009382

(56) Entgegenhaltungen:
- EP-A- 0 124 790
- DE-A- 2 656 191

## Beschreibung

Die Erfindung bezieht sich auf eine Lenkhilfenanordnung nach dem Oberbegriff des Anspruchs 1.

Aus der EP 0 124 790 ist eine Lenkhilfe bekannt geworden mit elektrischem Antrieb, welche koaxial in die Lenkwelle eingebaut ist. Die Servokrafteinkopplung erfolgt mit Hilfe eines Servomotores, der über ein Planetengetriebe auf die Lenkwelle einwirkt. Das Getriebe und der Motor ist koaxial gegenüber der Lenkwelle angeordnet, wobei die Lenkwelle zentrisch durch die Anordnung hindurchgeführt wird. Da der Motor und das Getriebe als separate, zusammengebaute Einheit ausgebildet ist, wird die Anordnung voluminös und besteht aus einer grossen Anzahl Teilen, welches nachteilig ist in Bezug auf Wirtschaftlichkeit und Zuverlässigkeit. Ein besonderer Nachteil besteht darin, dass das Sonnenrad des Planetengetriebes am Rotor des Motorantriebes befestigt ist, wobei der Rotor und das Sonnenrad koaxial zur Wellenachse drehbar angeordnet und gelagert ist. Daraus ist ersichtlich, dass das Sonnenrad bei dieser Ausführung immer einen relativ grossen Durchmesser aufweisen wird, zumindest aber nie einen kleineren Durchmesser aufweisen kann als die Lenkwelle selber. Da das Untersetzungsverhältnis eines Planetengetriebes im ersten Schritt vom Verhältnis der Durchmesser des Sonnenrades und der Planetenräder bestimmt wird, ist leicht ersichtlich, dass bei dieser Ausführung keine grossen Durchmesserverhältnisse der Räder erreicht werden können, da das Sonnenrad selbst bei dieser Bauweise immer einen relativ grossen Durchmesser aufweist. In der Beschreibung der vorerwähnten Anmeldung wird denn auch ein Untersetzungsverhältnis von 1:1 bis 1:10 angegeben. Grössere Untersetzungsverhältnisse wären bei der vorliegenden Ausführungsform nur möglich, wenn der gesamte Getriebedurchmesser drastisch erhöht würde, was zu unzulässigen Dimensionen der Lenkhilfeanordnung führen würde.

Kleine Getriebeuntersetzungsverhältnisse haben ausserdem den Nachteil, dass die Motorleistung entsprechend gross sein muss und im weiteren nur langsam drehende Motoren, welche entsprechenden Aufwand bedingen, eingesetzt werden können. Ein weiterer Nachteil ist hierbei das weniger rasche Ansprechverhalten, welches im System zu Reaktionsträgheiten führt.

Durch die voluminöse Bauweise steht vorallem in Richtung der Wellenachse weniger Bauraum zu Verfügung, was vorallem nachteilig auf die Sicherheitsfunktionen ist. Bei einem Aufprall des Lenkers auf das Steuerrad muss die Energie möglichst vorteilhaft aufgenommen werden, um den Fahrzeuglenker nicht zu verletzen. Dies wird dadurch erreicht, dass die Lenkspindel in so einem Fall durch teleskopartiges Ineinanderschieben energieverzehrend nachgeben soll. Daraus entsteht die Forderung, möglichst lange Schiebewege für die Energieabsorptionsvorrichtung zur Verfügung stellen zu können, was mit den bekannten Servoantrieben gemäss Stand der Technik nicht ohne weiteres möglich ist. Der benötigte grosse Einbauraum in axialer Richtung geht somit auf Kosten des gewünschten Energieabsorptionsverschiebeweges im Aufprallfall.

Ein weiterer Nachteil besteht bei bekannten Vorrichtungen darin, dass diese durch den komplizierten Aufbau neben mechanischem Spiel auch wegen grossen, zu bewegenden Massen eine gewisse Reaktionsträgheit aufweisen, was sich negativ auf das Lenkverhalten und die Wirtschaftlichkeit auswirkt. Aufwendige Bauweisen entsprechend den bekannten Anordnungen verzehren ausserdem in unvorteilhafter Weise viel Energie im Betrieb. Neben den Aufwendungen für die Zurverfügungstellung der notwendigen Energie sind auch zusätzliche Aufwendungen notwendig, um die entsprechenden Wärmeverluste abzuführen.

Die Aufgabe der vorliegenden Erfindung liegt darin, die Nachteile des vorerwähnten Standes der Technik zu beseitigen. Insbesondere besteht die Aufgabe darin, eine elektrische Lenkhilfe für eine Lenkanordnung zu realisieren, welche äusserst kompakt aufgebaut ist und welche es erlaubt, ein rasches Ansprechverhalten mit einer guten Dynamik mit ansprechendem Lenkverhalten für den Lenker zu erzielen, welche bei hohem Wirkungsgrad arbeitet und wirtschaftlich herstellbar ist.

Die Aufgabe wird erfindungsgemäss durch die Anordnung nach dem kennzeichnenden Teil des Anspruchs 1 gelöst. Die abhängigen Ansprüche definieren weitere vorteilhafte Ausführungsformen.

Die Aufgabe wird erfindungsgemäss dadurch gelöst, dass ein scheibenförmiger Elektromotor mit einem Planetengetriebe kombiniert wird und beides koaxial in die Welle einer Lenkspindel, einer Lenkwelle oder einem Lenkgetriebezapfen eingebaut ist, wobei die Welle im Einbaubereich der Antriebseinheit entlang der Lenkwellenachse entsprechend unterbrochen ist, bzw. die Lenkwelle in diesem Bereich eine Zwischenradwelle, welche das Sonnenrad des Planetengetriebes aufnimmt, umschliesst. Die Zwischenradwelle kann, da sie in der Lenkwellenachse liegt, ein Sonnenrad aufnehmen, welches in der Lenkwellenachse liegt und um diese rotiert und sehr kleine Durchmesser zulässt. Der Sonnenraddurchmesser ist bei dieser erfindungsgemässen Konstruktion nur durch die erforderlichen mechanischen Festigkeiten begrenzt. In jedem Fall kann der Sonnenraddurchmesser nur leicht grösser, wie maximal das 1,25 fache des Lenkwellendurchmessers sein. Um besonders hohe Untersetzungsverhältnisse zu erreichen kann der Durchmesser gleich gross oder vorzugsweise kleiner als derjenige der Lenkwelle selbst sein. Sehr gute Verhältnisse werden erreicht, wenn der Sonnenraddurchmesser im Bereich von 10 bis 20 mm liegt.

Die Anordnung erlaubt somit kompakte scheibenförmige Motor-Getriebe-Kombinationen, welche hohe Untersetzungsverhältnisse zulassen. Die scheibenförmige Motor-Getriebe-Anordnung kann hierbei vorzugsweise Durchmesser aufweisen von < 200 mm, vorzugsweise < 170 mm, bei axialen Längenausdehnungen, die kleiner als 90 mm sind, wobei Untersetzungsverhältnisse möglich sind von 1:10 bis 1:40. Bevorzugterweise werden die Untersetzungsverhältnisse > 1:20 gewählt, wobei Untersetzungsverhältnisse von > 1:30 noch günstiger sind. Die grossen Untersetzungsverhältnisse führen dazu, dass kompakte, wirtschaftlich arbeitende, elektronische Scheibenläufermotoren eingesetzt werden können. Solche Scheibenläufermotoren weisen einen scheibenförmigen Rotor auf, welcher Permanentmagnete enthält und seitlich zur Scheibenfläche, vorzugsweise beidseitig durch elektronisch gesteuerte Statorwicklungen betrieben wird. Um die vorerwähnte, in der Wellenachse gelagerte Zwischenwelle frei antreiben zu können, wird. die Zwischenwelle im auskragenden Lenkwellenbereich zentrisch drehbar gelagert und von der Rotorscheibe, welche ein Hohlzahnrad aufweist und mit einem weiteren Zahnkranz der Zwischenwelle gekoppelt ist, angetrieben.

Um die Motorkraft über den Rotor auf die Zwischenwelle einkoppeln zu können, ist es notwendig, die Rotorachse um einige mm, beispielsweise 3 mm, parallel versetzt gegenüber der Wellenachse beim Drehen des Lenkrades leicht taumelnd zu betreiben. Hierzu wird der Rotor auf der Wellenachse radial versetzt drehbar gelagert, so dass das Hohlzahnrad des Rotors am Zahnkranz des Zwischenrades nur auf einer Seite im Eingriff steht. Da die Statorwicklung in der Gehäuseanordnung ortsfest angeordnet ist, wird der Rotor bei dieser Anordnung in radialer Richtung beim Drehen der Lenkwelle eine um einige mm taumelnde Bewegung ausführen und gleichzeitig angetrieben um die versetzte Achse rotieren. Diese taumelnde Bewegung hat den weiteren Vorteil, dass die bei Scheibenläufermotoren, welche elektronisch kommutiert werden, auftretenden schrittartigen Bewegungen, welche als Rippel bezeichnet werden, gedämpft oder ausgeglichen werden können. Somit ist auch die Kraftübertragung im Servobetrieb auf die Lenkradwelle kontinuierlicher und der unerwünschte Rippel, bzw. das aus Sicherheitsgründen unerwünschte Rattern, bleibt aus. Um den gesamten Durchmesser weiter klein zu halten, werden mit Vorteil nur zwei mit dem Sonnenrad in Eingriff stehende Planetenräder eingesetzt. Die Planetenräder sind in der abtriebsseitigen Auskragung der Lenkwelle drehbar gelagert und enthalten in ihrer Achsrichtung eine weiter Verzahnung mit reduziertem Durchmesser gegenüber der Planetenradverzahnung. Diese weitere Verzahnung greift in ein Hohlrad mit Innenverzahnung ein, welches ortsfest mit dem Gehäuse der ganzen Motor-Getriebe-Kombination verbunden ist.

Die ganze Anordnung wird beim Betätigen der Lenkwelle so über Sensorelemente, Auswertelektronik und Leistungselektronik betrieben, dass entsprechend der Betätigung der Lenkwelle eine Krafteinkopplung auf die Lenkwelle erfolgt und somit eine leichtgängige Lenkung möglich ist. Die Anordnung führt zu einer sehr kompakten Bauweise, welche hohe Wirkungsgrade zulässt und ausserdem mit wenig Aufwand gut gekühlt werden kann. Das geforderte ergonomische Lenkverhalten kann realisiert werden und durch die kompakte, scheibenförmige Ausführung können für den Crashfall die notwendigen Absorptionselemente optimal realisiert und eingebaut werden.

Die Erfindung wird nun nachfolgend beispielsweise mit schematischen Figuren näher erläutert. Es zeigen:

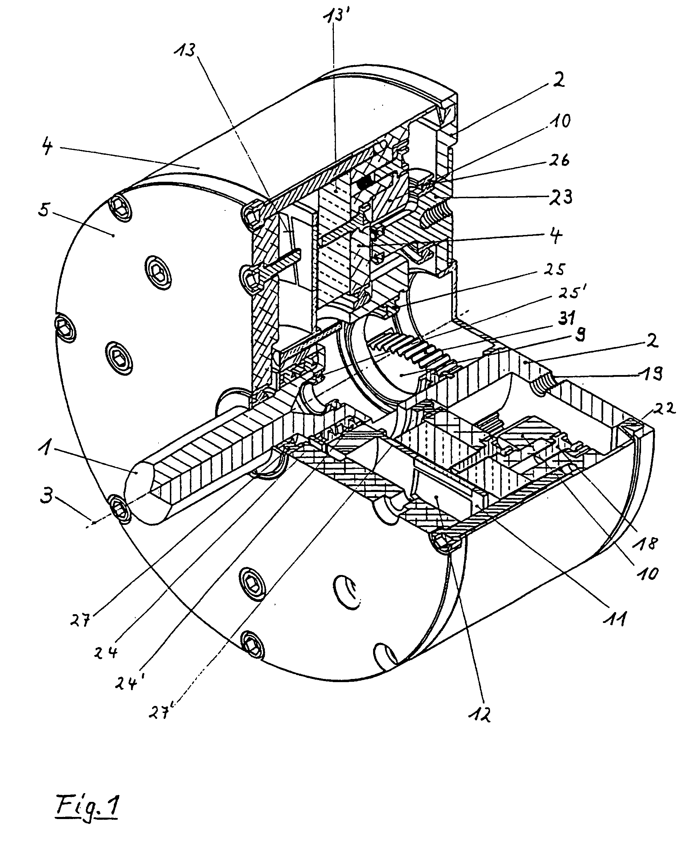

- Fig. 1: schematisch in dreidimensionaler Darstellung und aufgeschnitten eine erfindungsgemässe Anordnung
- Fig. 2: ein Längsschnitt durch die erfindungsgemässe Anordnung
- Fig. 3: ein Querschnitt der Anordnung im Bereich einer Statorwicklung mit Krafteinkopplung auf das Zwischenrad

Die Lenkwelle 1 mit der Achse 3, welche mit dem Steuerrad verbunden ist, ist im Gehäuse 4 im Bereich des Gehäusedekkels 5 und im Bereich einer Abstützung im Gehäuse über die Lager 27 und 27' drehbar gelagert. Die Welle ist im Bereich der Motor-Getriebe-Anordnung aufgeweitet und umschliesst ein Zwischenrad 6, welches innerhalb der Welle durch die Lager 25, 25' drehbar um die Zentralachse 3 gelagert ist. Auf der Abtriebsseite weist die Welle 1 Ausnehmungen auf, so dass Planetenräder 9, 9' radial in Richtung Achse 3 hindurch greifen können, um mit ihrer Aussenverzahnung 31 in die Verzahnung des Sonnenrades 7, welches auf der Zwischenradwelle 6 angeordnet ist, eingreifen zu können. Die Welle 1 ist abtriebsseitig als Planetenradträger 2 ausgebildet und weist Befestigungsmittel auf, um in Fortsetzung der Wellenachse 3 die Abtriebswelle, welche in den Figuren nicht gezeigt ist, anzukoppeln. Beispielsweise kann auch direkt auf der Abtriebsseite im Bereich der Planetenradträgeranordnung 2 eine Kardanankopplung erfolgen. Am Planetenradträger 2 sind Planetenradachsen 23, 23' angeordnet, welche Planetenradlager 26, 26' aufnehmen, um die Planetenräder 9, 9' um die parallel zur Wellenachse 3 angeordneten Planetenradachsen 23, 23' drehbar zu lagern.

Das Planetenrad 9, 9' enthält zusätzlich neben der Planetenradaussenverzahnung 31 eine weitere Verzahnung 30, welche ritzelförmig auf derselben Achse wie das Planetenrad 9 und mit kleinerem Durchmesser ausgebildet ist. Diese weitere Verzahnung 30 greift in eine Innenverzahnung eines Hohlrades 10 ein, welches mit dem Gehäuse 4 ortsfest verbunden ist. Dadurch stützt sich das Getriebe am Gehäuse 4, welches mit dem Fahrzeugchassis ortsfest verbunden ist, ab. Wie bereits erwähnt, kann bei dieser Zwischenradausführung 6 der Getriebeanordnung das Sonnenrad 7 mit sehr viel geringerem Durchmesser ausgeführt werden, was grosse Untersetzungsverhältnisse im Getriebe ermöglicht. Beispielsweise wurde eine Anordnung ausgeführt, bei welchem die Lenkwellenachse 1 20 mm Durchmesser und das Sonnenrad nur 12 mm Durchmesser aufwies. Das Planetenrad hatte ein Aussenverzahnungsdurchmesser von 77 mm und bei der weiteren ritzelförmigen Verzahnung 30 einen Durchmesser von 18 mm, wobei das Hohlrad einen Durchmesser von 106,5 mm aufwies. Hiermit konnte ein sehr grosses Untersetzungsverhältnis von 1:32 bei kompakter Bauform mühelos erreicht werden. Die Motor-Getriebe-Kombination wies hierbei scheibenförmige Gehäuseabmessungen auf mit einem Durchmesser von 170 mm und einer axialen Längenausdehnung von 90 mm.

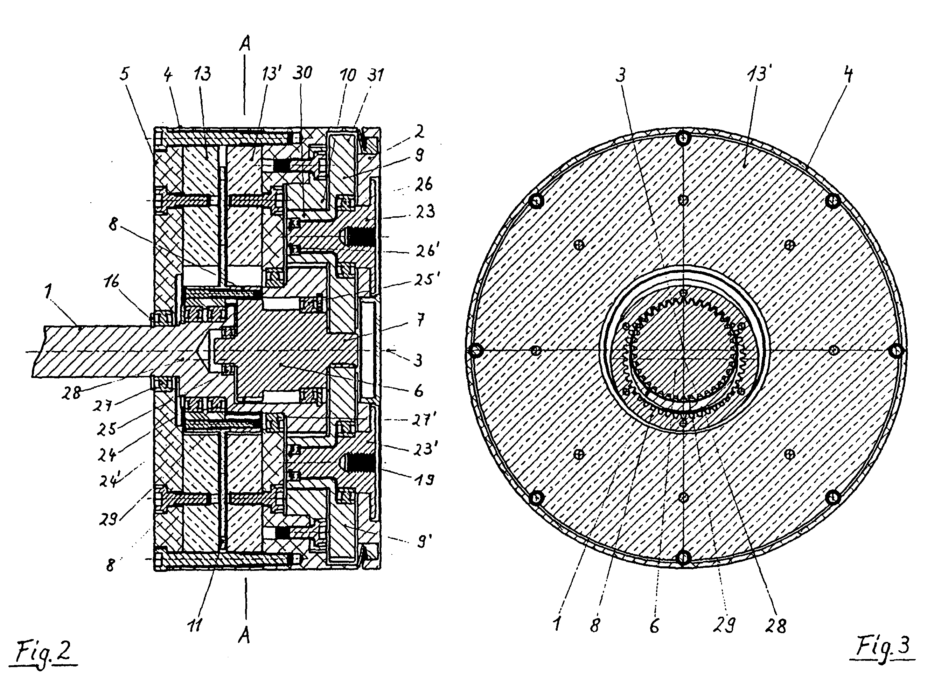

Um das Zwischenrad 6 über den Scheibenläufermotor 11, 13 antreiben zu können, enthält das Zwischenrad 6 einen weiteren Zahnkranz 29, welcher von einem Hohlzahnrad 8, das mit der Rotorscheibe 11 des Motors verbunden ist, angetrieben wird. Das Rotorhohlzahnrad 8 steht hierzu einseitig mit dem Hauptzahnrad der Zwischenradwelle 6 im Eingriff, wie dies in Figur 3 im Querschnitt dargestellt ist. Hierzu ist es notwendig, die Rotorachse 28 parallel zur Wellenachse 3 leicht zu versetzen ca. um einige mm, im vorerwähnten Beispiel um ca. 3 mm, wodurch die Rotorscheibe 11 mit dem Hohlzahnrad 8 eine leicht taumelnde Bewegung um die Wellenachse 3 ausführt beim Drehen der Lenkwelle. Entsprechend dem bereits erwähnten Beispiel hatte das Rotorhohlzahnrad einen Durchmesser von 46 mm und das Hauptzahnrad 29 der Zwischenradwelle 6 einen Durchmesser 39 mm. Diese Anordnung erzeugt zwar eine leicht unerwünschte Übersetzung, welche aber gegenüber der sehr grossen Untersetzungsverhältnisse im Planetengetriebe vernachlässigt werden kann. Um die Rotorachse 28 wie vorerwähnt versetzen zu können, wird der Rotor mit den Lagern 24, 24' auf der Welle 1 exzentrisch bzw. radial zur Wellenachse 3 versetzt auf dieser drehbar gelagert. Der Rotor 11 enthält Permanentmagnete, welche durch die elektromagnetisch gesteuerte Krafteinwirkung von der Statorwicklung 13, 13' angetrieben wird. Vorzugsweise werden beidseitig zur Rotorfläche 11 Statorwicklungen 13, 13' angeordnet, welche stationär im Gehäuse 4 bzw. am Gehäuse 5 fixiert sind. Beim Drehen der Welle 1 taumelt der Rotor 11 entsprechend um die Achse 3 ohne den Krafteingriff in die Zwischenradwelle 6 zu verlieren. Auf diese Art und Weise rotiert der Rotor 11 zwischen den Wicklungen 13, 13' einerseits um die versetzte Achse 28 und zusätzlich, weniger schnell exzentrisch um die Achse 3. Dies hat den zusätzlichen Vorteil, dass bei entsprechender Dimensionierung und Überlappung der Wicklungen 13, 13' mit dem Magnetfeld der Permanentmagnete im Rotor 11 zusätzlich eine Ausgleichung der Antriebsschritte des elektronischen Antriebes erfolgt, wodurch weniger Vibrationen des Antriebsmotors auf die Lenkwelle zurückwirken.

## Patentansprüche

1. Lenkhilfenanordnung für Kraftfahrzeuge mit einer um eine Längsachse (3) drehbaren Welle (1) und koaxial dazu angeordnetem, elektrischem Scheibenläufermotor mit einem dazu koaxial angeordneten, wirkverbundenen Planetengetriebe und, welches die Motorkraft übersetzend, mit der Welle (1) gekoppelt ist **dadurch gekennzeichnet, dass** die Welle (1) im Einbaubereich der Antriebseinheit entlang der Lenkwellenachse (3) unterbrochen ist derart, daß die Welle (1) in diesem Bereich aufgeweitet ist und ein in der Lenkwellenachse (3) drehgelagenes Zwischenrad (6) umschließt, welches Teil des Planetengetriebes bildet, wobei der Motor eine Rotorscheibe (11) aufweist, welche um eine gegenüber der Achse (3) parallel versetzte Achse (28) an der Welle (1) drehbar und um die Achse (3) taumelnd gelagert ist, wobei am Rotor (11) ein mittaumelndes Hohlzahnrad (8) befestigt ist, welches auf das Planetengetriebe wirkt.

2. Anordnung nach Anspruch 1 **dadurch gekennzeichnet, dass** die Welle (1) ein Zwischenradwellenstück (7) drehgelagert um die Achse (3) einschliesst und dass am einen Ende das Zwischenrad als Zahnrad (29) ausgebildet ist, welches in das exzentrisch laufende Hohlzahnrad (8) eingreift und am anderen Ende, mit kleinerem Durchmesser, ebenfalls ein Zahnrad (7) ausgebildet ist und dieses als Sonnenrad (7), das mit einem ersten, äusseren Zahnkranz (31) versehenen Planetenrad (26, 26') des Getriebes antreibt.

3. Anordnung nach einem der vorhergehenden Ansprüche **dadurch gekennzeichnet, dass** mindestens ein, vorzugsweise zwei Planetenräder (9, 9') an einer radialen Auskragung der Welle (1) drehbar um eine Parallelachse (23, 23') zur Achse (3) gelagert (26, 26') sind.

4. Anordnung nach einem der vorhergehenden Ansprüche **dadurch gekennzeichnet, dass** am Planetenrad (9, 9') ein zweiter Zahnkranz (30) mit gegenüber dem ersten Zahnkranz (31) kleinerem Durchmesser vorgesehen ist, welcher mit einem gehäusefesten Hohlzahnrad (10) im Eingriff steht.

5. Anordnunung nach einem der vorhergehenden Ansprüche **dadurch gekennzeichnet, dass** das Sonnenrad (7) maximal das 1,25 fache des Durchmessers der Welle (1) aufweist, vorzugsweise maximal den gleichen Durchmesser, insbesondere einen kleineren Durchmesser, vorzugsweise im Bereich von 10 bis 20 mm.

6. Anordnung nach einem der vorhergehenden Ansprüche **dadurch gekennzeichnet, dass** die Getriebeanordnung mit dem Sonnenrad (7), dem Planetenrad (9) und dem Hohlrad (10) eine Untersetzung von 1:10 bis 1:40 bildet, vorzugsweise mindestens 1:20, weiter vorzugsweise mindestens 1:30.

7. Anordnung nach einem der vorhergehenden Ansprüche **dadurch gekennzeichnet, dass** die Rotorscheibe (11) Permanentmagnete enthält und dieser zwischen einer seitlich zur Rotorscheibe (11) stationär angeordneten Statorwicklung (13, 13') radial taumelnd angeordnet ist, so dass der Motorrippel beim rotieren gedämpft wird.

## Claims

1. A steering aid arrangement for motor vehicles with a shaft (1) rotatable about a longitudinal axis (3) and arranged coaxial to this an electric disc armature motor with a planet gear arranged coaxial to and actively connected with this and coupled to the shaft (1) to support the motor power, **characterised in that** the shaft (1) in the fitting area of the drive unit is interrupted along the steering shaft axis (3) such that the shaft (1) is expanded in this area and encloses an intermediate wheel (6) rotatably mounted in the steering shaft axis (3) and forming part of the planet gear, where the motor has a rotor disc (11) mounted on the shaft (1) and rotatable about an axis (28) offset parallel to the axis (3) and tumbling about the axis (3), where on the rotor (11) and tumbling with this is attached a ring gear (8) which acts on the planet gear.

2. Arrangement according to claim 1, **characterised in that** the shaft (1) includes an intermediate wheel shaft section (7) mounted rotatable about the axis (3) and that at one end the intermediate wheel is formed as a gear wheel (29) which engages in the eccentrically running ring gear (8) and at the other end is also formed a gear wheel (7) with smaller diameter which as sun wheel (7) drives the planet wheel (26, 26') fitted with a first outer toothed crown (31) of the gear.

3. Arrangement according to any of the previous claims, **characterised in that** at least one, preferably two planet wheels (9, 9') are mounted (26, 26') on a radial projection of the shaft (1) and can rotate about an axis (23, 23') parallel to the axis (3).

4. Arrangement. according to any of the previous claims, **characterised in that** on the planet wheel (9, 9') is provided a second toothed crown (30) which has a smaller diameter than the first toothed crown (31) and engages in a rigid-housing ring gear (10).

5. Arrangement according to any of the previous claims, **characterised in that** the sun wheel (7) has maximum 1.25 times the diameter of the shaft (1), preferably maximum the same diameter, in particular a smaller diameter, preferably in the range from 10 to 20 mm.

6. Arrangement according to any of the previous claims, **characterised in that** the gear arrangement with the sun wheel (7), planet wheel (9) and ring gear (10) forms a gear reduction of 1:10 to 1:40, preferably at least 1:20, further preferably at least 1:30.

7. Arrangement according to any of the previous claims, **characterised in that** the rotor disc (11) contains permanent magnets and is arranged radially tumbling between a stator winding (13, 13') arranged stationary at the side of the rotor disc (11) so that the motor ripple during rotation is damped.

## Revendications

1. Agencement de direction assistée pour véhicules à moteur qui inclut un arbre (1) rotatif autour d'un axe longitudinal (3) et un moteur électrique à entrefer agencé coaxialement à celui-ci, une boîte à engrenages planétaires, qui est agencée coaxialement à l'arbre et connectée fonctionnellement avec lui et qui est couplée à l'arbre (1) en multipliant la force du moteur, **caractérisé en ce que** l'arbre (1) est interrompu dans la zone occupée par l'unité d'entraînement le long de l'axe (3) de l'arbre de direction d'une manière telle que l'arbre (1) est élargi dans cette zone et entoure un pignon intermédiaire (6) qui est logé à rotation dans l'axe (3) de l'arbre de direction et fait partie de la boîte à engrenages planétaires, **en ce que** le moteur comporte un disque (11) de rotor qui est logé à rotation sur l'arbre (1) et en nutation autour de l'axe (3), autour d'un axe (28) déporté parallèlement à l'axe (3), et **en ce qu'**un engrenage creux (8) auquel est communiqué le mouvement de nutation et qui intervient sur la boîte à engrenages planétaires est fixé sur le rotor (11).

2. Agencement selon la revendication 1, **caractérisé en ce que** l'arbre (1) inclut un élément (7) d'arbre de pignon intermédiaire logé à rotation autour de l'axe (3) et **en ce que** le pignon intermédiaire consiste à sa première extrémité en une roue dentée (29) qui s'engrène avec l'engrenage creux (8) à rotation excentrique et consiste, à l'autre extrémité de plus petit diamètre, également en une roue dentée (7) et que celle-ci entraîne, en tant que roue solaire (7), le satellite (26, 26') pourvu d'une première couronne dentée extérieure (31).

3. Agencement selon l'une quelconque des revendications précédentes, **caractérisé en ce qu'**au moins un et de préférence deux satellites (9, 9') sont logés à rotation autour d'un axe (23, 23') parallèle à l'axe (3) sur une saillie radiale de l'arbre (1).

4. Agencement selon l'une quelconque des revendications précédentes, **caractérisé en ce qu'**une deuxième couronne dentée (30) d'un diamètre plus petit que la première couronne dentée (31), qui est engrenée avec un engrenage creux (10) solidaire du carter, est prévue sur le satellite (9, 9').

5. Agencement selon l'une quelconque des revendications précédentes, **caractérisé en ce que** le diamètre de la roue solaire (7) est au maximum égal à 1,25 fois celui de l'arbre (1), de préférence au maximum égal à ce dernier, et en particulier plus petit que celui-ci, de préférence dans la plage de 10 à 20 mm.

6. Agencement selon l'une quelconque des revendications précédentes, **caractérisé en ce que** l'agencemen de boîte qui inclut la roue solaire (7), le satellite (9) et l'engrenage creux (10) constitue une démultiplication de 1:10 à 1:40, de préférence d'au moins 1:20, et de façon encore préférable d'au moins 1:30.

7. Agencement selon l'une quelconque des revendications précédentes, **caractérisé en ce que** le disque (11) de rotor contient des aimants permanents et que celui-ci est agencé radialement à nutation latéralement entre un enroulement (13, 13') de stator agencé de façon stationnaire latéralement par rapport au disque de rotor (11), ce qui amortit les vibrations du moteur lorsqu'il tourne.
